# EUROPEAN PATENT SPECIFICATION

(11) **EP 4 019 753 B1**
(45) Date of publication and mention of the grant of the patent: **20.11.2024**
(21) Application number: 20216274.9
(22) Date of filing: 22.12.2020
(51) Int. Cl.: F02C 3/22, F02C 6/08, F02C 6/18, F02C 7/18, F02C 7/224, F02C 9/18

(54) **POWER PLANT COMPRISING A GAS TURBINE ASSEMBLY AND A STEAM TURBINE ASSEMBLY FOR FORMING A COMBINED CYCLE AND METHOD FOR OPERATING THIS POWER PLANT**
KRAFTWERK MIT EINER GASTURBINENANORDNUNG UND EINER DAMPFTURBINENANORDNUNG ZUR BILDUNG EINES KOMBIZYKLUS UND VERFAHREN ZUM BETREIBEN DIESES KRAFTWERKS
CENTRALE ÉLECTRIQUE COMPRENANT UN ENSEMBLE TURBINE À GAZ ET UN ENSEMBLE TURBINE À VAPEUR POUR FORMER UN CYCLE COMBINÉ ET PROCÉDÉ DE FONCTIONNEMENT DE CETTE CENTRALE ÉLECTRIQUE

(43) Date of publication of application: 29.06.2022
(73) Proprietor: Ansaldo Energia Switzerland AG, 5400 Baden (CH)
(72) Inventor: DUSOMOS, Gerard, 5604 HENDSCHIKEN (CH); RINN, Joerg, 5417 UNTERSIGGENTHAL (CH); ANGUISOLA McFEAT, Jose, 79787 LAUCHRINGEN (DE)
(74) Representative: Studio Torta S.p.A.

(56) References cited:
- EP-A2- 1 154 136
- US-A- 5 255 505

## Description

### Field of the Invention

The technical field of the present invention relates to the power plant assemblies. In particular, the present invention refers to a power plant comprising only a gas turbine assembly or to a power plant comprising a gas turbine assembly and steam turbine assembly for forming a combined cycle. In this technical field, the present invention refers to the technical problem of how to integrate two components already present in the power plant in order to increase the performance/efficiency.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a closed volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and flowing by the turbine assembly performs a rotating work on a rotor connected to a generator. Usually the same rotor supports also the compressor assembly. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known.

According to a first embodiment, the gas turbine comprises a first combustor and the second combustor that are annular shaped and are physically separated by a turbine, called high pressure turbine. Downstream the second combustor a second turbine unit is present (called low pressure turbine) .

A gas turbine of this type is produced by the Applicant and is available on the market as "GT26".

According to a second embodiment of a sequential gas turbine, the gas turbine is not provided with the highpressure turbine and the combustor assembly is realized in form of a plurality of can-combustors wherein each can-combustor comprises a first combustor and a second combustor arranged directly one downstream the other inside a common casing can-shaped. Also a gas turbine of this type is produced by the Applicant and is available on the market as "GT36". These two examples of gas turbine assemblies (GT26 and GT36) have been cited only as non-limiting examples wherein the present invention can be applied.

In these gas turbine assemblies, for cooling reasons it is known to spill part of the compressed air from the compressor or from the plenum and to guide this air inside the rotor and the turbine, i.e. the parts to be cooled in contact with to the hot gas flow. For lowering the temperature of the spilled compressed air it is known to provide the gas turbine with a first heat exchanger, in particular a cooler or cooling device (for instance a so called Once Through Cooler or "OTC") configured for cooling the spilled compressed air and for feeding this cooled air to the turbine and the rotor for cooling purposes. This cooling device is usually a component arranged outside the gas turbine casing and therefore ducts are present for feeding the spilled compressed air to the cooling device (at least a spilled air inlet duct) and for guiding the cooled air to the turbine and the rotor (at least a cooled air outlet duct). In detail, this cooling device is a counter-flow heat exchanger using a cooling medium for lowering the temperature of the spilled compressed air. For this scope, the plant is also provided with ducts for feeding the cooling medium to the cooling device (at least a cooling medium inlet duct) and for guiding the "heated" cooling medium away from the cooling device (at least a cooling medium outlet duct).

Moreover, a gas turbine assembly may also be provided with a second heat exchanger, in particular a heater or heating device, configured for heating the fuel, the gas fuel, before the feeding to the combustor assembly (a so called pre-heated fuel gas). Indeed it is known that a pre-heated gas fuel up to 300°C improves the assembly performance in terms of an improved combustion efficiency.

The gas turbine assembly may cooperate with a steam turbine assembly for forming a so called combined cycle power plant. In particular, in a combined cycle the steam configured for driving the steam turbine is generated by using the heat of the exhaust gas leaving the gas turbine assembly. In this plant, it is known to use the water or steam spilled from the steam turbine as cooling medium in the above mentioned cooling device (OTC). The heated cooling medium in form of high pressure steam can be fed in turn to the steam turbine assembly. Under particular circumstances, the high pressure steam leaving the cooling device is not directed to the steam turbine but is directly guided to the exhaust stack of the gas turbine. This configuration is called "open loop" and the plant requires a continuous supply of purified water in order to replace the loss released through the stack. Under different circumstances, the high pressure steam leaving the cooling device is guided to a condenser. In this configuration, called "closed loop", water is circulated for preventing loss.

The dumping of the high pressure steam into the exhaust stack or collecting it in the condenser involves an inefficient use of the heat.

US5255505 discloses a power plant comprising a gas turbine, a steam turbine, a cooler for cooling air, a first heater for heating fuel or water to be injected in the gas turbine and a second heater for heating water to be injected in the steam turbine. A fluid medium is provided flowing in a closed loop by a pump through the cooler for cooling the air, through the first heater for heating the fuel/water to be injected in the gas turbine or through the second heater for heating the water to be injected in the steam turbine.

### Disclosure of the invention

Accordingly, a primary object of the present invention is to provide a new and inventive power plant suitable for overcoming the above problem, i.e. to improve the performance and the energy efficiency.

In particular, the present invention refers to a power plant comprising a gas turbine assembly and a steam turbine assembly according to claim 1 for forming an improved combined cycle.

The gas turbine assembly comprises:
- a compressor configured for compressing incoming air and feeding the compressed air to a plenum;
- a combustor assembly configured for feeding at least a fuel coming from a fuel source in the compressed air and for generating by combustion a hot gas flow;
- a turbine configured for being driven by the hot gas for performing work on a rotor connected to a generator.

The above listed components forming a gas turbine assembly are well known by the skill person in the art and therefore no additional details are due for understanding the field of the present invention. Moreover, the present invention does not affect the shape or kind of the above components that therefore may be realized in many different forms. For instance, the combustor assembly may be a single annular combustor or a plurality of can combustors.

The gas turbine assembly according the present invention comprises moreover a heater or heating assembly comprising:
- a heating device configured for pre-heating the fuel (i.e. heating the fuel, preferably gas fuel, before feeding the combustor assembly);
- an inlet fuel duct connecting a fuel source to the heating device;
- an outer fuel duct connecting the heating device to the combustor assembly.

According to the invention the term "duct" does not mean necessary a single duct but also a distribution line comprising more than a duct.

The heating device is a counter-flow heat exchanger and therefore the heating assembly moreover comprises:
- an inlet heating medium duct for feeding a heating medium to the heating device;
- a outlet heating medium duct for delivery the heating medium from the heating device.

The heating assembly, in particular the heating medium, is configured for heating the fuel between 250°C and 320°C, preferably at 300°C, before feeding the combustor assembly.

The gas turbine assembly according the present invention comprises moreover a cooling assembly comprising:
- a cooling device configured for cooling spilled pressure air, i.e. part of the compressed air delivered by the compressor in the plenum;
- an inlet air duct connecting the plenum to the cooling device;
- an outlet air duct connecting the cooling device to the turbine and/or the rotor for cooling reason.

The cooling device is a counter-flow heat exchanger and therefore the cooling assembly moreover comprises:
- an inlet cooling medium duct for feeding a cooling medium to the cooling device;
- an outlet cooling medium duct for delivering the cooling medium from the cooling device.

The cooling assembly, in particular the cooling medium, is configured for cooling the compressed air before the feeding to the turbine or rotor.

In this configuration, according to the main feature of the present invention the inlet heating medium duct is connected to the outlet cooling medium duct, i.e. for forming a common duct, so that the cooling medium delivered by the cooling device and heated by the compressed air is used as heating medium in the heating device for pre-heating the fuel.

The cooling medium fed to the cooling device is steam and therefore the cooling medium leaving the cooler device is high pressure steam. The inlet cooling medium duct is therefore connected to a steam source.

Preferably, the power plant comprises a stack for the exhaust hot gas. In this case, the outlet heating medium duct is provided with a valve for selectively feeding the steam leaving the heating device to the stack or to a condenser.

As foregoing mentioned, the steam fed to the cooling device is coming from a steam source. According to the invention, this source is a steam turbine assembly that in cooperation with the gas turbine assembly forms a combined cycle. In this sense, the power plant of the present invention comprises also a steam turbine assembly wherein the exhaust hot gas leaving the gas turbine is used as heating medium for heating the water/steam circulating in the steam turbine assembly. The cooling medium duct is therefore connected to the steam turbine assembly for feeding to the cooling device steam spilled from the steam turbine assembly as cooling medium. The inlet cooling medium duct may also be provided with a valve for selectively connecting the cooling device to the steam turbine assembly or to a different water or steam source.

Preferably, the outlet cooling medium duct comprises a valve for selectively feeding the high pressure steam leaving the cooling device to the heating device or to the steam turbine assembly depending on the operating conditions of the plant.

A method for operating a power plant according to the present invention is defined in claim 5 and comprises the steps of:
a) providing a power plant with at least a gas turbine assembly as foregoing described and claimed in claim 1;
b) cooling air spilled from the plenum in a cooling device by means of a cooling medium;
c) pre-heating the fuel before feeding the combustor assembly in a heating device by means of a heating medium;
wherein the method comprises also the step of:
d) feeding the cooling medium leaving the cooling device to the heating device in order to use the heated cooling medium leaving the cooler device as heating medium in the heating device.

Advantageously, in this case and in particular during open cycle operations, the heat of the heated cooling medium leaving the cooling device is not lost but it is used in the heating device for pre-heating the fuel.

It is to be understood that the following detailed description is exemplary and is intended to provide further explanation of the invention as claimed. Other advantages and features of the invention will be apparent from the following description, drawings and claims.

The features of the invention are set forth in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of an example of a gas turbine assembly for power plants;
- figure 2 is a schematic view of a power plant comprising a gas turbine assembly and a steam turbine assembly for forming a combined cycle;
- figure 3 is a schematic view of the power plant of figure 2 provided with a heater device for pre-heating the fuel;
- figure 4 is a schematic view of the power plant of figure 3 modified according to the present invention.

### Detailed description of preferred embodiments of the invention

In cooperation with the attached drawings, the technical contents and detailed description of the present invention are described thereinafter according to preferred embodiments, being not used to limit its executing scope.

Reference will now be made to the drawing figures to describe the present invention in detail.

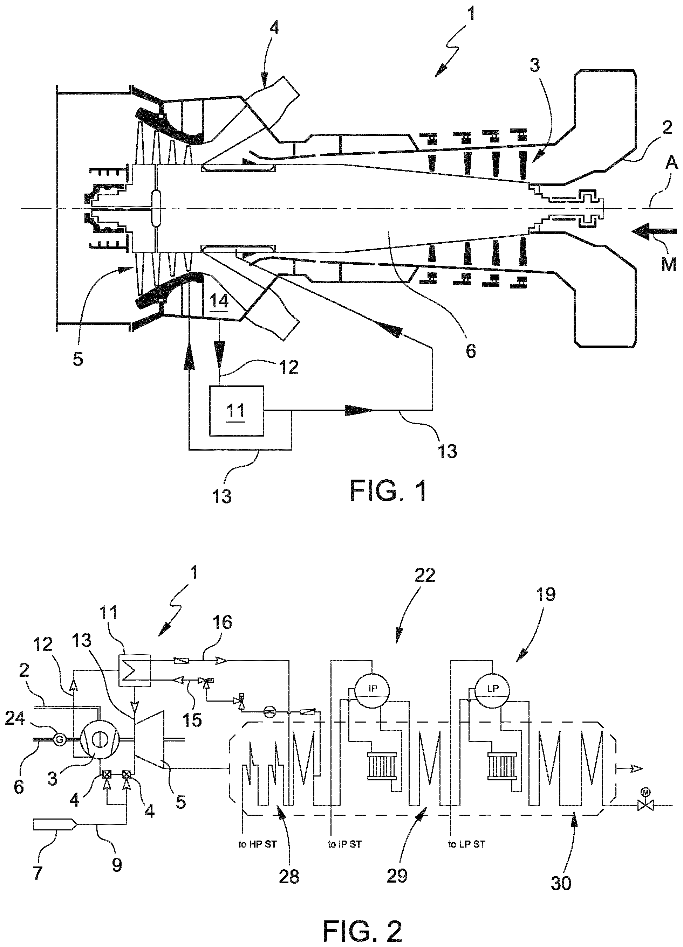

Reference is now made to Fig. 1, that is a schematic view of an embodiment of a power plant comprising a gas turbine assembly suitable for being improved according to the present invention. Figure 1 discloses a gas turbine assembly 1 having a rotor 6 defining an axis A and comprising in series along the main flow M:
- a compressor 3 for compressing air fed by an air intake 2 and for delivering the compressed air in a plenum 14,
- a combustor assembly 4 wherein the compressed air leaving the plenum 14 is mixed with at a fuel and this mixture is combusted to create a hot gas flow,
- a turbine 5 where the hot gas flow expands performing rotating work on the rotor 6 connected to a generator 24.

According to figure 1, the combustor assembly 4 comprises a plurality of can combustors 4 arranged as a ring around the axis A. In each can combustor 4, a single combustion stage or two combustion stages in series may be realized. In figure 1 reference 11 refers to a cooling device connected via ducts 12 13 to the gas turbine assembly. In particular reference 12 refers to duct configured for connecting the plenum 14 to the cooling device 11 so that part of the compressed air may be spilled, cooled and forwarded via ducts 13 inside the turbine 5 (inside the blades and or vanes) and/or inside the rotor 6 for cooling reason.

Reference is made now to figure 2 that is a schematic view of a power plant comprising the gas turbine assembly of figure 1 and a steam turbine assembly 19 forming a combined cycle power plant. As known, in this plant the exhaust hot gas leaving the gas turbine is used in the steam turbine assembly as heating medium for heating the steam driving the steam turbines 28 29 30. In figure 2 reference 7 refers to a fuel source, in particular a gas fuel source, configured for feeding fuel via ducts 9 to the combustor assembly 4. Figure 2 discloses that the cooling device 11 is a counter-flow heat exchanger (called OTC) wherein water or steam spilled from the steam turbine assembly 19 is used as cooling medium for cooling the compressed air fed to the cooling device 11. For this reason, the plant comprises at least a duct 15 for feeding water or steam spilled from the steam turbine assembly 19 to the cooling device 11 and at least a duct 16 for guiding the pressurized steam leaving the cooling device 11. In this example the duct 16 is configured for guiding the pressurized steam from the cooling device 11 in the steam turbine assembly 19 for driving the steam turbines 28 29 30.

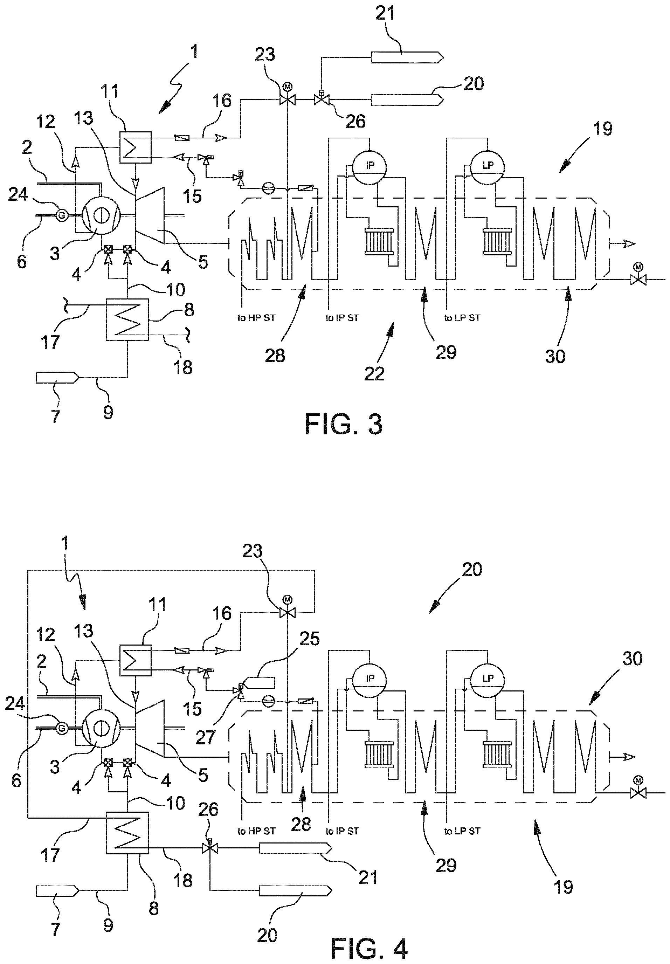

Figure 3 discloses the plant of figure 2 with additional details. Under particular circumstances, the pressurized steam leaving the cooling device 11 in the duct 16 is not guided to the steam turbine assembly 19 but to a stack 20 or a condenser 21 for forming so called open cycle or closed cycle. For this scope, the duct 16 is provided with a valve 23 for selectively guiding the pressurized steam to the steam turbine assembly 19 or to the stack 20 (or to the condenser 21 via an additional valve 31). Reference 8 in figure 3 refers to a heating device configured for heating the gas fuel before the feeding to the combustor assembly 4. For this scope, the plant 22 of figure 3 comprises at least a duct 9 connecting the fuel source 7 to the heating device 8 and at least a duct 10 connecting the heating device 8 to the combustor assembly 4. As for the cooling device 11, also the heating device 8 is a counter-flow heat exchanger and the references 17 and 18 refer to at least a duct for feeding a heating medium to the heating device 8 and to at least a duct for guiding the cooled heating medium 8 away from the heating device 8. Starting from this configuration currently used in the prior art practice, figure 4 discloses how the plant of figure 3 may be modified and improved according to the present invention.

As foregoing described, and as supported by figure 3, during the so called open cycle the pressurized steam leaving the cooling device 11 is directly guided to the stack 20. On the contrary, the present invention offers an inventive solution for using the heat of this pressurized steam in this open cycle application before the delivery to the stack 20 (or to the condenser 21). In particular, as disclosed in figure 4, the inlet heating medium duct configured for feeding the heating device 8 is connected to the outlet cooling medium duct 16 starting from the cooling device 16. Thus, by the valve 23 the pressurized air leaving the cooling device may be directed to the steam turbine assembly or to the heating device 8 for being used as heating medium for pre-heating the fuel. After the heating step, the steam leaving the heating device 8 is guided to the stack 20 or (via the valve 26) to the condenser 21. Finally, reference 25 refers to an independent or separate water source 25 for selectively feeding (via valve 27) the cooling device 11 with fresh water instead of water or steam coming from the steam turbine assembly.

Although the invention has been explained in relation to its preferred embodiment(s) as mentioned above, it is to be understood that many other possible modifications and variations can be made without departing from the scope of the present invention. For instance the teaching of the current disclosure can be applied not necessary in a combined cycle power plant but also in a single gas turbine assembly having the claimed cooling device and heating, whereby this application is not covered by the claims.

In this case the fluid medium running first in the cooling device for cooling the air and after in the heating device for pre-heating the gas fuel is not necessarily water or steam or may be water fed by a separate water source 25. The scope of the invention is defined in the appended claims.

## Claims

1. Power plant comprising a gas turbine assembly (1);
the gas turbine (1) comprises:
- a compressor (3) configured for compressing incoming air and feeding compressed air to a plenum (14);
- a combustor assembly (4) configured for feeding at least a fuel coming from a fuel source (7) in the compressed air and for generating by combustion a hot gas flow;
- a turbine (5) configured for being driven by the hot gas for performing work on a rotor (6) connected to a generator (24) ;
- a heating assembly comprising a heating device (8) configured for pre-heating the fuel, an inlet fuel duct (9) connecting the fuel source (7) to the heating device (8), an outer fuel duct (10) connecting the heating device (8) to the combustor assembly (4), an inlet heating medium duct (17) for feeding a heating medium to the heating device (8) and a outlet heating medium duct (18) for delivery the heating medium from the heating device (8);
- a cooling assembly comprising a cooling device (11) configured for cooling spilled high pressure air, an inlet air duct (12) connecting the plenum (14) to the cooling device (11), an outlet air duct (13) connecting the cooling device (11) to the turbine (5) and/or the rotor (6) for cooling reason, an inlet cooling medium duct (15) for feeding a cooling medium to the cooling device (11) and an outlet cooling medium duct (16) for delivering the cooling medium from the cooling device (11);
wherein
the inlet heating medium duct (17) is connected to the outlet cooling medium duct (16) so that the cooling medium delivered by the cooling device (11) is used as heating medium in the heating device (8) for pre-heating the fuel;
wherein the power plant (22) comprises a steam turbine assembly (19) wherein the exhaust hot gas leaving the gas turbine is used as heating medium for heating the water/steam circulating in the steam turbine assembly (19); **characterized in that** the inlet cooling medium duct (15) is connected to the steam turbine assembly (19) for feeding to the cooling device (11) steam spilled from the steam turbine assembly (19).

2. Power plant as claimed in claim 1, wherein the power plant (22) comprising a stack (20) for the exhaust hot gas, the outlet heating medium duct (18) being provided with a valve (26) for selectively feeding the steam leaving the heating device (8) to the stack (20) or to a condenser (21).

3. Power plant as claimed in claim 1, wherein the outlet cooling medium duct (16) comprises a valve (23) for selectively feeding the high pressure steam leaving the cooler device (11) to the heating device (8) or to the steam turbine assembly (19).

4. Power plant as claimed in claim 1 or 3, wherein inlet cooling medium duct (15) is provided with a valve (27) for selectively connecting the cooling device (11) to the steam turbine assembly (19) or to a water source (25).

5. Method for operating a power plant; the method comprising the steps of:
a) providing a power plant (22) as claimed in claim 1;
b) cooling air spilled from the plenum (14) in a cooling device (11) by means of a cooling medium;
c) pre-heating the fuel before feeding the combustor assembly (4) in a heating device (8) by means of a heating medium;
d) feeding the cooling medium leaving the cooling device (11) to the heating device (8) in order to use the cooling medium leaving the cooling device (11) as heating medium in the heating device (8);
**characterized in that** the step a) is performed by providing a power plant (22) according to claim 4, in step b) the cooling medium used for cooling the air spilled from the plenum (14) is steam spilled from the steam turbine assembly (19).

6. Method as claimed in claim 5, wherein the cooling medium used as heating medium in the heating device (8) is high pressure steam; the method comprising the step of feeding the steam leaving the heating device (8) to a stack (20) or to a condenser (21).

7. Method as claimed in claim 5, wherein the step d) is performed by selectively feeding the cooling medium leaving the cooling device (11) to the heating device (8) or to the steam turbine assembly (19).

## Patentansprüche

1. Kraftwerk, umfassend eine Gasturbinenanordnung (1);
wobei die Gasturbine (1) umfasst:
- einen Verdichter (3), der dazu konfiguriert ist, eintretende Luft zu verdichten und verdichtete Luft einem Plenum (14) zuzuführen;
- eine Brennkammeranordnung (4), die dazu konfiguriert ist, mindestens einen von einer Brennstoffquelle (7) kommenden Brennstoff der verdichteten Luft zuzuführen und durch Verbrennung einen Strom heißen Gases zu erzeugen;
- eine Turbine (5), die dazu konfiguriert ist, durch das heiße Gas angetrieben zu werden, um an einem Rotor (6) Arbeit zu verrichten, der mit einem Generator (24) verbunden ist;
- eine Heizanordnung, die eine Heizvorrichtung (8) umfasst, die dazu konfiguriert ist, den Brennstoff vorzuheizen, einen Brennstoff-Einlasskanal (9), der die Brennstoffquelle (7) mit der Heizvorrichtung (8) verbindet, einen äußeren Brennstoffkanal (10), der die Heizvorrichtung (8) mit der Brennkammeranordnung (3) verbindet, einen Heizmedium-Einlasskanal (17) zum Zuführen eines Heizmediums an die Heizvorrichtung (8) und einen Heizmedium-Auslasskanal (18) zum Auslassen des Heizmediums aus der Heizvorrichtung (8);
- eine Kühlanordnung, umfassend eine Kühlvorrichtung (11), die dazu konfiguriert ist, ausgetretene Hochdruckluft zu kühlen, einen Luft-Einlasskanal (12), der das Plenum (14) mit der Kühlvorrichtung (11) verbindet, einen Luft-Auslasskanal (13), der die Kühlvorrichtung (11) mit der Turbine (5) und/oder dem Rotor (6) für Kühlzwecke verbindet, einen Kühlmedium-Einlasskanal (15) zum Zuführen eines Kühlmediums an die Kühlvorrichtung (11) und einen Kühlmedium-Auslasskanal (16) zum Auslassen des Kühlmediums aus der Kühlvorrichtung (11);
wobei der Heizmedium-Einlasskanal (17) mit dem Kühlmedium-Auslasskanal (16) verbunden ist, sodass das von der Kühlvorrichtung (11) ausgelassene Kühlmedium als Heizmedium in der Heizvorrichtung (8) verwendet wird, um den Brennstoff vorzuwärmen;
wobei das Kraftwerk (22) eine Dampfturbinenanordnung (19) umfasst, wobei das die Gasturbine verlassende heiße Abgas als Heizmedium zum Erwärmen des in der Dampfturbinenanordnung (19) zirkulierenden Wassers/Dampfs verwendet wird;
**dadurch gekennzeichnet, dass** der Kühlmedium-Einlasskanal (15) mit der Dampfturbinenanordnung (19) verbunden ist, um den aus der Dampfturbinenanordnung (19) austretenden Dampf der Kühlvorrichtung (11) zuzuführen.

2. Kraftwerk gemäß Anspruch 1, wobei das Kraftwerk (22) einen Schornstein (20) für heißes Abgas umfasst, wobei der Heizmedium-Auslasskanal (18) mit einem Ventil (26) ausgestattet ist, um selektiv den die Heizvorrichtung (8) verlassenden Dampf dem Schornstein (20) oder einem Kondensator (21) zuzuführen.

3. Kraftwerk gemäß Anspruch 1, wobei der Kühlmedium-Auslasskanal (16) ein Ventil (23) umfasst, um selektiv den die Kühlvorrichtung (11) verlassenden Hochdruckdampf der Heizvorrichtung (8) oder der Dampfturbinenanordnung (19) zuzuführen.

4. Kraftwerk gemäß Anspruch 1 oder 3, wobei der Kühlmedium-Einlasskanal (15) mit einem Ventil (27) ausgestattet ist, um selektiv die Kühlvorrichtung (11) mit der Dampfturbinenanordnung (19) oder mit einer Wasserquelle (25) zu verbinden.

5. Verfahren zum Betreiben eines Kraftwerks; wobei das Verfahren die folgenden Schritte aufweist:
a) Bereitstellen eines Kraftwerks (22) gemäß Anspruch 1;
b) Kühlen von Luft, die von dem Plenum (14) ausgetreten ist, in einer Kühlvorrichtung (11) mittels eines Kühlmediums;
c) Vorwärmen des Brennstoffs vor dem Zuführen in die Brennkammeranordnung (4) in einer Heizvorrichtung (8) mittels eines Heizmediums;
d) Zuführen des Kühlmediums, das die Kühlvorrichtung (11) verlässt, an die Heizvorrichtung (8), um das die Kühlvorrichtung (11) verlassende Kühlmedium als Heizmedium in der Heizvorrichtung (8) zu nutzen;
**dadurch gekennzeichnet, dass** der Schritt a) dadurch ausgeführt wird, dass ein Kraftwerk (22) gemäß Anspruch 4 bereitgestellt wird, in Schritt b) das Kühlmedium, das zum Kühlen der aus dem Plenum (14) ausgetretenen Luft verwendet wird, aus der Dampfturbinenanordnung (19) ausgetretener Dampf ist.

6. Verfahren gemäß Anspruch 5, wobei das als Heizmedium in der Heizvorrichtung (8) verwendete Kühlmedium Hochdruckdampf ist; wobei das Verfahren den Schritt des Zuführens des die Heizvorrichtung (8) verlassenden Dampfs an einen Schornstein (20) oder an einen Kondensator (21) umfasst.

7. Verfahren gemäß Anspruch 5, wobei der Schritt d) dadurch ausgeführt wird, dass das die Kühlvorrichtung (11) verlassende Kühlmedium selektiv der Heizvorrichtung (8) oder der Dampfturbinenanordnung (19) zugeführt wird.

## Revendications

1. Centrale électrique comprenant un ensemble turbine à gaz (1) ; la turbine à gaz (1) comprend :
- un compresseur (3) configuré pour comprimer l'air entrant et amener l'air comprimé à un plénum (14) ;
- un ensemble de chambre de combustion (4) configuré pour alimenter au moins un combustible provenant d'une source de combustible (7) dans l'air comprimé et pour générer, par combustion, un écoulement de gaz chaud ;
- une turbine (5) configurée pour être entraînée par le gaz chaud pour réaliser un travail sur un rotor (6) raccordé à un générateur (24) ;
- un ensemble de chauffage comprenant un dispositif de chauffage (8) configuré pour préchauffer le combustible, un conduit de combustible d'entrée (9) raccordant la source de combustible (7) au dispositif de chauffage (8), un conduit de combustible externe (10) raccordant le dispositif de chauffage (8) à l'ensemble de chambre de combustible (4), un conduit d'entrée de milieu de chauffage (17) pour alimenter un milieu de chauffage au dispositif de chauffage (8) et un conduit de sortie de milieu de chauffage (18) pour la distribution du milieu de chauffage depuis le dispositif de chauffage (8) ;
- un ensemble de refroidissement comprenant un dispositif de refroidissement (11) configuré pour refroidir de l'air à haute pression déversé, un conduit d'entrée d'air (12) raccordant le plénum (14) au dispositif de refroidissement (11), un conduit de sortie d'air (13) raccordant le dispositif de refroidissement (11) à la turbine (5) et/ou au rotor (6) pour raison de refroidissement, un conduit d'entrée de milieu de refroidissement (15) pour alimenter un milieu de refroidissement au dispositif de refroidissement (11) et un conduit de sortie de milieu de refroidissement (16) pour distribuer le milieu de refroidissement depuis le dispositif de refroidissement (11) ;
dans laquelle le conduit d'entrée de milieu de chauffage (17) est raccordé au conduit de sortie de milieu de refroidissement (16) de sorte que le milieu de refroidissement distribué par le dispositif de refroidissement (11) est utilisé en tant que milieu de chauffage dans le dispositif de chauffage (8) pour préchauffer le combustible ;
dans laquelle la centrale électrique (22) comprend un ensemble turbine à vapeur (19), dans laquelle le gaz chaud d'échappement sortant de la turbine à gaz est utilisé en tant que milieu de chauffage pour chauffer l'eau/la vapeur circulant dans l'ensemble turbine à vapeur (19) ;
**caractérisée en ce que** le conduit d'entrée de milieu de refroidissement (15) est raccordé à l'ensemble turbine à vapeur (19) pour amener, au dispositif de refroidissement (11), la vapeur déversée de l'ensemble turbine à vapeur (19).

2. Centrale électrique selon la revendication 1, dans laquelle la centrale électrique (22) comprend une colonne (20) pour le gaz chaud d'échappement, le conduit de sortie de milieu de chauffage (18) étant prévu avec une valve (26) pour alimenter sélectivement la vapeur sortant du dispositif de chauffage (8), à la colonne (20) ou à un condenseur (21).

3. Centrale électrique selon la revendication 1, dans laquelle le conduit de sortie de milieu de refroidissement (16) comprend une valve (23) pour alimenter sélectivement la vapeur à haute pression sortant du dispositif de refroidissement (11) au dispositif de chauffage (8) ou à l'ensemble turbine à vapeur (19).

4. Centrale électrique selon la revendication 1 ou 3, dans laquelle le conduit d'entrée de milieu de refroidissement (15) est prévu avec une valve (27) pour raccorder sélectivement le dispositif de refroidissement (11) à l'ensemble turbine à vapeur (19) ou à une source d'eau (25).

5. Procédé pour faire fonctionner une centrale électrique ; le procédé comprenant les étapes comprenant les faits de :
a) prévoir une centrale électrique (22) selon la revendication 1 ;
b) refroidir l'air déversé à partir du plénum (14) dans un dispositif de refroidissement (11) au moyen d'un milieu de refroidissement ;
c) préchauffer le combustible avant d'alimenter l'ensemble de chambre de combustion (4) dans un dispositif de chauffage (8) au moyen d'un milieu de chauffage ;
d) amener le milieu de refroidissement sortant du dispositif de refroidissement (11) au dispositif de chauffage (8) afin d'utiliser le milieu de chauffage sortant du dispositif de refroidissement (11) en tant que milieu de chauffage dans le dispositif de chauffage (8) ;
**caractérisé en ce que** :
l'étape a) est réalisée en prévoyant une centrale électrique (22) selon la revendication 4, à l'étape b) le milieu de refroidissement utilisé pour refroidir l'air déversé à partir du plénum (14) est la vapeur déversée à partir de l'ensemble turbine à vapeur (19).

6. Procédé selon la revendication 5, dans lequel le milieu de refroidissement utilisé en tant que milieu de chauffage dans le dispositif de chauffage (8) est la vapeur à haute pression ; le procédé comprenant l'étape comprenant le fait d'amener la vapeur sortant du dispositif de chauffage (8) à une colonne (20) ou à un condenseur (21).

7. Procédé selon la revendication 5, dans lequel l'étape d) est réalisée en amenant sélectivement le milieu de refroidissement sortant du dispositif de refroidissement (11) au dispositif de chauffage (8) ou à l'ensemble turbine à vapeur (19).
